# FASCICULE DE BREVET EUROPEEN

(11) **EP 3 646 578 B1**
(45) Date de publication et mention de la délivrance du brevet: **30.11.2022**
(21) Numéro de dépôt: 18749438.0
(22) Date de dépôt: 21.06.2018
(51) Int. Cl.: H04L 65/1016

(54) **PROCÉDÉ DE SYNCHRONISATION D'ÉTAT MÉDIA**
VERFAHREN ZUR MEDIENZUSTANDSSYNCHRONISATION
METHOD OF MEDIA STATE SYNCHRONIZATION

(30) Priorité: 26.06.2017 FR 1755824
(43) Date de publication de la demande: 06.05.2020
(73) Titulaire: Orange, 92130 Issy-les-Moulineaux (FR)
(72) Inventeur: DOREE, José, 92326 Châtillon cedex (FR); LE ROUZIC, Jean-Claude, 92326 Châtillon cedex (FR)
(86) Numéro de dépôt international: PCT/FR2018/051504
(87) Numéro de publication internationale: WO 2019/002730

(56) Documents cités:
- EP-B1- 1 988 680
- WO-A1-2015/181505
- "3rd Generation Partnership Project; Technical Specification Group Core Network and Terminals; Policy and Charging Control over Rx reference point (Release 14)", 3GPP STANDARD; 3GPP TS 29.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V14.2.0, 19 décembre 2016 (2016-12-19), pages 1-77, XP051230190, cité dans la demande

## Description

La présente invention concerne les réseaux de communications de type IP (« *Internet Protocol* »), et notamment ceux parmi les réseaux IP qui sont aptes à mettre en œuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour assurer la concordance de l'état des ressources média auprès des entités responsables de la réservation de ces ressources.

Les protocoles de contrôle de session évolués classiques, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension définit des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *Third Generation Partnership Project* ») et TISPAN (« *Telecommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux usagers ainsi que la réservation des ressources au niveau du réseau de transport des flux multimédia. Grâce à cette architecture, les opérateurs réseau peuvent commodément mettre en œuvre une politique de gestion, fournir une Qualité de Service prédéterminée, et calculer les montants à facturer aux usagers. L'IMS permet actuellement d'accéder à des services de type téléphonie, visiophonie, Présence et Messagerie Instantanée, dont elle gère aussi l'interaction.

Lorsque donc un usager souhaite bénéficier des services offerts par un réseau IMS, il émet vers le réseau des messages de signalisation pouvant inclure notamment divers types de requêtes.

Tout d'abord, le dispositif-client de l'usager doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'usager doit envoyer périodiquement au réseau une requête pour confirmer qu'il souhaite maintenir son enregistrement.

Pour pouvoir enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

Les réseaux IMS comprennent en outre un ou plusieurs serveurs d'interrogation, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs d'enregistrement S-CSCF pour constituer des serveurs d'appel dénotés « I/S-CSCF » - qui, au moment de l'enregistrement d'un dispositif-client, interrogent un serveur de données d'abonné appelé « HSS » (initiales des mots anglais « *Home Subscriber Server* » signifiant «Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'usager. Les serveurs HSS contiennent chacun une base de données d'usagers, et sont donc l'équivalent dans les réseaux IP des serveurs « HLR » (initiales des mots anglais *« Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services auxquels il a droit.

En effet, après qu'un serveur S-CSCF lui a été ainsi attribué, chaque usager peut faire usage d'un certain nombre de services pendant la session en cours. Il peut par exemple s'agir de services offerts automatiquement à tous les usagers du réseau IMS. Il peut aussi s'agir de services auxquels cet usager a souscrit auprès de l'opérateur du réseau, et qui sont mis automatiquement à sa disposition. Enfin, il peut s'agir de services dont l'usager peut faire usage après avoir émis une requête appropriée (SIP SUBSCRIBE).

Ces services comprennent des applications audiovisuelles telles que mentionnées ci-dessus. Il peut s'agir également d'une souscription à l'état d'une ressource, auquel cas des notifications d'évènement (SIP NOTIFY) sont envoyées au dispositif-client dès lors que l'état de la ressource change ; par exemple, lorsque l'utilisateur d'un dispositif-client dispose d'une boîte vocale sur le réseau, il pourra être informé chaque fois qu'un message a été enregistré sur cette boîte vocale ; un utilisateur peut, de même, demander à être notifié de l'état d'enregistrement de son propre dispositif-client.

Les réseaux IMS comprennent en outre un ou plusieurs serveurs appelés « P-CSCF » (initiales des mots anglais « *Proxy-Call Server Control Function* » signifia0nt « Fonction de Commande de Session d'Appel Mandataire »). Pour chaque dispositif-client connecté à un réseau IMS, il existe un serveur P-CSCF servant d'entité de raccordement entre le cœur de réseau IMS et le réseau d'accès utilisé par ce dispositif-client ; ainsi, toute la signalisation SIP échangée entre le dispositif-client d'une part, et le serveur d'interrogation I-CSCF ou le serveur d'enregistrement S-CSCF d'autre part, passe par le serveur P-CSCF.

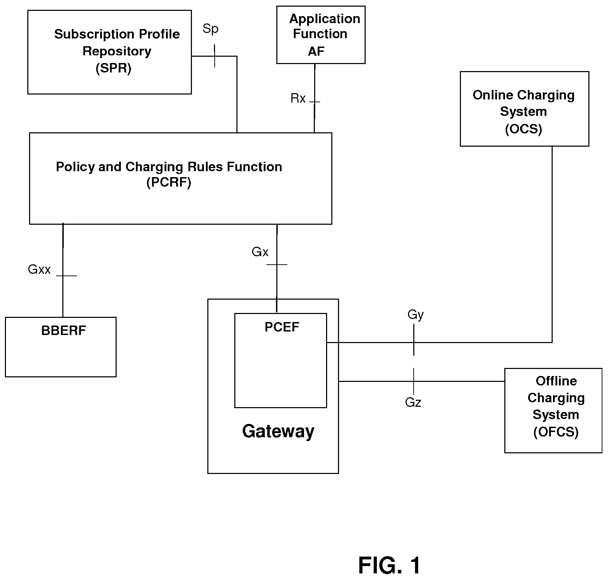

Pour mettre en œuvre la taxation des usagers, les réseaux IMS utilisent une architecture appelée PCC (initiales des mots anglais « *Policy and Charging Control* » signifiant « Commande de Politique et de Taxation »). Cette architecture PCC est également utilisée dans les réseaux mobiles à commutation de paquets comprenant un réseau cœur EPC (initiales des mots anglais « *Evolved Packet Core* » signifiant « Cœur de Réseau Paquet Evolué »), comme décrit dans le document TS 23.203 du 3GPP. L'architecture EPC est illustrée sur la **figure 1****,** qui est adaptée de la figure 5.1.1 dudit document TS 23.203.

Cette architecture PCC comprend notamment une entité de contrôle des règles appelée PCRF (initiales des mots anglais « *Policy Control and Charging Rules Function* » signifiant « Fonction de Commande de Politique et de Règles de Taxation »), qui fournit des règles de taxation et de politique d'opérateur (comme par exemple le débit maximum alloué, ou la priorité d'un flux selon son type) à une entité d'application des règles PCEF (initiales des mots anglais *« Policy and Charging Enforcement Function* » signifiant « Fonction d'Application de Politique et de Taxation »).

L'entité de contrôle des règles PCRF est apte à déterminer la méthode de taxation pour un flux de service donné ; elle a accès aux données d'abonnement de l'usager afin de pouvoir adapter l'utilisation des ressources de transport faite par ce service, ainsi que la taxation du service, en fonction du profil de l'usager. L'entité de contrôle des règles PCRF collecte depuis plusieurs sources des informations liées aux réseaux (telles que le type d'accès radio, les adresses de passerelles, ou la localisation du terminal de l'usager), des informations liées à l'abonnement de l'usager, et des informations liées aux applications utilisées par l'usager sur son terminal (telles que le type d'application, ou le type de média). L'entité de contrôle PCRF a accès aux informations de souscription de l'utilisateur du terminal, qui sont mémorisées dans une base de données appelée SPR (initiales des mots anglais « *Subscription Profile Repository* »), afin de pouvoir adapter l'affectation des ressources de transport par le service concerné ainsi que la taxation du service en fonction du profil de l'utilisateur du terminal.

L'entité PCEF, quant à elle, sélectionne une règle PCC pour chaque paquet de données dudit flux en examinant les données de service contenues dans ce paquet. La fonction PCEF est mise en œuvre au niveau d'une passerelle d'accès (« *Gateway* » en anglais) au réseau cœur. Le document TS 29.212 du 3GPP (intitulé « *Policy and Charging Control over Gx reference point* ») définit l'interface « Gx » entre l'entité de contrôle PCRF et l'entité d'application des règles PCEF. Lors de l'ouverture d'une session de communication, l'entité d'application des règles PCEF ouvre une session de commande relative à la session de communication avec l'entité de contrôle des règles PCRF et lui communique des informations associées à cette session de communication (par exemple le type d'accès radio, les paramètres de qualité de service demandés, ou la bande passante demandée). En fonction de ces caractéristiques et d'autres informations provenant de plusieurs autres sources, l'entité de contrôle PCRF détermine la politique initiale (qualité de service, tarification à mettre en place, autorisation d'accès) à appliquer pour les différents services portés par la session de communication en cours. Cette politique peut être modifiée en fonction d'événements se produisant durant la session de communication.

Une entité applicative AF (initiales des mots anglais « *Application Function* ») communique avec l'entité de contrôle des règles PCRF (ou une entité mandataire) pour transmettre des informations de session dynamiques et pour recevoir des notifications, par exemple relatives à l'occurrence d'évènements. Le document TS 29.214 du 3GPP (intitulé « Policy and Charging Control over Rx reference point ») définit l'interface « Rx » entre l'entité de contrôle des règles PCRF et l'entité applicative AF. Lors de l'ouverture d'une session de communication, l'entité applicative AF fait une demande de ressources média auprès de l'entité PCRF.

Le serveur P-CSCF d'un réseau IMS, mentionné ci-dessus, est un exemple classique d'entité applicative AF.

Enfin, l'entité BBERF (initiales des mots anglais « *Bearer Binding and Event Reporting Function* » signifiant « Fonction de Compte-Rendu de Liens de Canaux Virtuels et d'Evénements ») permet à l'entité de contrôle des règles PCRF de disposer d'informations utiles pour le contrôle et la supervision des réseaux d'accès locaux sans-fil WLAN (initiales des mots anglais « Wireless Local Access Network »).

Grâce à ces diverses entités, l'architecture PCC est apte à générer des CDR (initiales des mots anglais « *Call Detail Record* » signifiant « Enregistrement des Détails d'Appel »). Plus précisément, une entité OCS (initiales des mots anglais « *Online Charging System* » signifiant « Système de Taxation En Ligne ») génère des CDR au fil de l'eau, cependant qu'une entité OFCS (initiales des mots anglais « *Offline Charging System* » signifiant « Système de Taxation Hors Ligne ») génère un fichier comprenant un ensemble de CDR que l'opérateur du réseau vient récupérer périodiquement (par exemple, toutes les heures ou tous les jours).

On notera que toutes les interfaces de l'architecture PCC (hormis l'interface avec la base de données SPR) mettent en œuvre le protocole de base DIAMETER décrit dans le document RFC 3588 de l'IETF.

Lors de la demande de ressources de l'entité applicative AF, celle-ci communique, au travers de l'interface Rx mentionnée ci-dessus, les caractéristiques des ressources désirées. Ces ressources sont essentiellement un ensemble de « média » (par exemple un flux « audio » et un flux « vidéo ») possédant certaines propriétés souhaitées par un usager du réseau. L'information concernant un média se présente ainsi :
Media-Component-Description ::= < AVP Header: 517 >
{ Media-Component-Number } ; Ordinal number of the media comp.
^{∗}[ Media-Sub-Component ] ; Set of flows for one flow identifier
[ AF-Application-Identifier ]
[ Media-Type ]
[ Max-Requested-Bandwidth-UL ]
[ Max-Requested-Bandwidth-DL ]
[ Max-Supported-Bandwidth-UL ]
[ Max-Supported-Bandwidth-DL ]
[ Min-Desired-Bandwidth-UL ]
[ Min-Desired-Bandwidth-DL ]
[ Min-Requested-Bandwidth-UL ]
[ Min-Requested-Bandwidth-DL ]
[ Flow-Status ]
[ Priority-Sharing-Indicator ]
[ Reservation-Priority ]
[ RS-Bandwidth ]
[ RR-Bandwidth ]
^{∗}[ Codec-Data ]
[ Sharing-Key-DL ]
[ Sharing-Key-UL ]
[ Content-Version ]
^{∗}[ AVP ]

Chaque média est identifié par un numéro appelé « Media-Component-Number », ainsi que par des caractéristiques diverses (débit, type de média, adresses, et ainsi de suite).

Il importe que l'état courant de ces composants média soit connu à l'identique sur l'entité applicative AF et sur l'entité de contrôle des règles PCRF : en effet, un composant connu sur l'entité de contrôle des règles PCRF et inconnu sur l'entité applicative AF constitue une anomalie (un « orphelin »), qu'il est nécessaire de détecter et supprimer car cela se traduit par une consommation inutile de ressources - et à l'extrême à une saturation des ressources du PCRF s'il y a uniquement des orphelins.

Or suite à différents événements réseaux, la formation d'orphelins est possible dans certaines circonstances. A titre d'exemple, si le lien entre l'entité applicative AF et l'entité de contrôle des règles PCRF est perdu pendant un certain laps de temps, des événements peuvent avoir conduit à la libération de ressources par l'entité de contrôle des règles PCRF sans que l'entité applicative AF puisse en avoir connaissance, par exemple en raison d'une perte de connectivité dans un réseau d'accès radio RAN (initiales des mots anglais « Radio Access Network »). Selon un autre exemple, si l'entité applicative AF a dû être totalement ou en partie réinitialisée, elle a pu perdre la connaissance précise des média en cours d'utilisation. Il en est de même si l'entité applicative AF a été remplacée, par exemple suite à la mise en œuvre de redondance géographique. Le même problème se pose dans les réseaux fixes TISPAN (Telecommunications and Internet converged Services and Protocols for Advanced Networking) conformes à la norme TS 183 017 de l'ETSI (European Telecommunications Standards Institute).

Le document WO 2015/181505 décrit un procédé pour informer une entité d'un réseau IP du type de réseau d'accès utilisé par un terminal. Le document EP1988680 décrit un procédé de contrôle de politique approprié à une utilisation dans un réseau.

La présente invention est telle que définie dans le jeu de revendications joint. Elle concerne donc, selon un premier aspect, un procédé de synchronisation d'état média, comprenant les étapes suivantes :
- une entité applicative émet vers une entité de contrôle des règles une requête demandant à ladite entité de contrôle des règles d'envoyer à ladite entité applicative un message décrivant l'état des média contrôlés par cette entité applicative et en cours d'utilisation,
- à l'échéance d'un délai par défaut ou contenu dans ladite requête, l'entité de contrôle des règles émet vers l'entité applicative un message dans lequel l'entité de contrôle des règles décrit l'état desdits média, et
- suite à la réception dudit message, l'entité applicative
   - n'entreprend aucune action si la liste de média fournie par l'entité de contrôle des règles est identique à la liste de média connue de l'entité applicative, ou
   - corrige son état desdits média si un sous-ensemble des média de la liste est différent de la liste de média connue de l'entité applicative, ou
   - demande la libération de la session si l'ensemble des média de la liste est différent de la liste de média connue de l'entité applicative ou si la session elle-même est inconnue de l'entité applicative.

On notera que l'invention s'applique à tout réseau utilisant un protocole de réservation de flux média, notamment les réseaux de type IMS et EPC.

Grâce à ces dispositions, un opérateur dudit réseau permet à l'entité applicative et à l'entité de contrôle des règles de se resynchroniser mutuellement, à des échéances choisies.

Selon des caractéristiques particulières, l'entité applicative indique en outre à l'entité de contrôle des règles une période à l'échéance de laquelle l'entité applicative souhaite recevoir lesdits messages décrivant l'état desdits média.

Grâce à ces dispositions, l'entité applicative peut indiquer à l'entité de contrôle des règles la périodicité souhaitée pour les notifications de l'état desdits média dans le cas où cette périodicité n'a pas été préconfigurée dans l'entité de contrôle des règles.

Selon d'autres caractéristiques particulières, ladite requête est présentée par ladite entité applicative lors d'une demande de ressources média auprès de ladite entité de contrôle des règles.

Grâce à ces dispositions, on réduit au minimum la signalisation entre l'entité applicative et l'entité de contrôle des règles.

Selon encore d'autres caractéristiques particulières, les échanges entre l'entité applicative et l'entité de contrôle des règles sont conformes au protocole Diameter.

Grâce à ces dispositions, on utilise le protocole de signalisation classiquement mis en œuvre dans l'architecture PCC.

Selon un deuxième aspect, l'invention concerne divers dispositifs.

Elle concerne ainsi, premièrement, une entité applicative comprenant des moyens pour :
- émettre vers une entité de contrôle des règles une requête demandant à ladite entité de contrôle des règles d'envoyer à ladite entité applicative un message décrivant l'état des média contrôlés par cette entité applicative et en cours d'utilisation,
- recevoir un message dans lequel l'entité de contrôle des règles décrit l'état desdits média, et
- suite à la réception dudit message,
   - n'entreprendre aucune action si la liste de média fournie par l'entité de contrôle des règles est identique à la liste de média connue de l'entité applicative, ou
   - corriger son état desdits média si un sous-ensemble des média de la liste est différent de la liste de média connue de l'entité applicative, ou
   - demander la libération de la session si l'ensemble des média de la liste est différent de la liste de média connue de l'entité applicative ou si la session elle-même est inconnue de l'entité applicative.

Selon des caractéristiques particulières, ladite entité applicative comprend en outre des moyens pour indiquer à ladite entité de contrôle des règles une période à l'échéance de laquelle l'entité applicative souhaite recevoir lesdits messages décrivant l'état desdits média.

Selon d'autres caractéristiques particulières, ladite entité applicative comprend en outre des moyens pour mettre en œuvre le protocole Diameter.

L'invention concerne aussi, deuxièmement, une entité de contrôle des règles comprenant des moyens pour :
- recevoir d'une entité applicative une requête demandant à ladite entité de contrôle des règles d'envoyer à ladite entité applicative un message décrivant l'état des média contrôlés par cette entité applicative et en cours d'utilisation, et
- à l'échéance d'un délai par défaut ou contenu dans ladite requête, émettre vers l'entité applicative un message dans lequel l'entité de contrôle des règles décrit l'état desdits média.

Selon des caractéristiques particulières, ladite entité de contrôle des règles comprend en outre des moyens pour mettre en œuvre le protocole Diameter.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

Selon un troisième aspect, l'invention concerne un système de communication comprenant au moins une entité applicative et au moins une entité de contrôle des règles telles que décrites succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de synchronisation succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente une architecture PCC classique, et
- la figure 2 représente schématiquement un système pour la fourniture de services multimédia apte à mettre en œuvre l'invention.

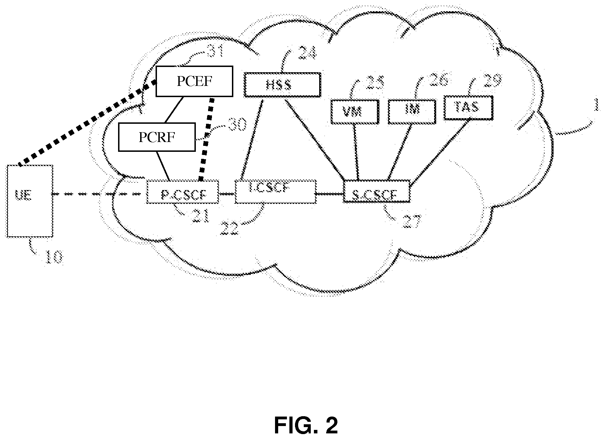

Bien que la présente invention concerne tout réseau IP faisant usage du protocole DIAMETER, on va considérer à présent, à titre d'exemple de réalisation, une architecture de réseau de type IMS, telle que présentée succinctement ci-dessus. Cette architecture est illustrée sur la **figure 2****.**

Les services multimédia offerts par ce réseau IMS 1 peuvent comprendre des services de téléphonie, de vidéo-téléphonie, de partage de contenu (« *content-sharing* » en anglais), de Présence, de Messagerie Instantanée, ou de télévision. Ces services sont à la disposition de l'utilisateur d'un dispositif-client (« *User Equipment* », ou UE en anglais) 10 appartenant au réseau 1, qui permet au dispositif-client 10 d'échanger des flux multimédia et des signaux de contrôle de session conformes au protocole SIP, par exemple avec le dispositif-client (non représenté) d'un usager appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 2, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre le dispositif-client 10 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux (non représentés) ;
- au moins un serveur P-CSCF ; le serveur P-CSCF 21 sert d'entité de raccordement entre le cœur de réseau IMS et le réseau d'accès utilisé par le dispositif-client 10 ;
- au moins un serveur de base de données, de type HSS ; le serveur HSS 24 contient le profil de l'utilisateur du dispositif-client 10 en termes de données d'authentification et de localisation, et de services souscrits ;
- au moins un serveur VM 25 de messagerie vocale (« *message-summary »* en anglais) ; le serveur VM 25 gère la souscription du dispositif-client 10 aux événements de dépôt/consultation des messages à l'intention du dispositif-client 10, et notifie le dispositif-client 10 lors de l'occurrence de ces événements ;
- au moins un serveur de Messagerie Instantanée IM 26 ; en cas de souscription de l'utilisateur de l'UE 10 au service de Messagerie Instantanée, cet utilisateur peut dialoguer « instantanément » en ligne avec d'autres abonnés à ce service ; et
- au moins un serveur de téléphonie TAS 29 ; le serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Messagerie Instantanée IM 26, et de téléphonie TAS 29 sont des exemples de Serveurs d'Applications (AS).

Certains services, comme ceux du serveur VM 25 et du serveur de Messagerie Instantanée IM 26, s'appuient sur la souscription du terminal 10 à des événements prédéterminés, comme expliqué ci-dessus.

Sur la figure 2, les lignes en pointillé représentent le chemin réel suivi par les signaux SIP (entre l'UE 10 et l'entité PCEF 31, puis entre l'entité PCEF 31 et le serveur P-CSCF 21). La ligne hachurée (entre l'UE 10 et le serveur P-CSCF 21) représente le chemin « logique » de la signalisation SIP. L'entité PCRF 30 est connectée à l'entité PCEF 31 et au serveur P-CSCF 21. Le serveur P-CSCF 21 joue ici le rôle d'entité applicative AF selon l'architecture PCC.

De manière connue, cette architecture peut mettre en œuvre les étapes suivantes.

Lors d'une étape E1, le serveur P-CSCF 21 reçoit un message de contrôle de session émis par l'UE 10 et contenant une description de flux media conforme au protocole SDP (Session Description Protocol).

Lors d'une étape E2, le serveur P-CSCF 21 émet une demande de réservation de flux média auprès de l'entité PCRF 30. Cette demande de réservation de flux média est un message de contrôle de ressources Diameter « AAR » (pour « AA-Request ») tel que défini dans le document RFC 4005 de l'IETF.

Lors d'une étape E3, l'entité PCRF 30 envoie au serveur P-CSCF 21 un message d'acquittement de la demande de réservation de flux. Ce message d'acquittement est un message de contrôle de ressources Diameter « AAA » (pour « AA-Answer ») tel que défini dans le document RFC 4005.

Lors d'une étape E4, l'entité PCRF 30 envoie à l'entité d'application des règles PCEF 31 un message décrivant les règles à installer pour mettre en œ uvre les flux média. Ce message décrivant les règles à installer est un message de contrôle de ressources Diameter « RAR » (pour « RA-Request ») tel que défini dans le document RFC 4005.

Lors d'une étape E5, l'entité PCEF 31 envoie à l'entité PCRF 30 un message d'acquittement d'installation des règles. Ce message d'acquittement est un message de contrôle de ressources Diameter « RAA » (pour « RA-Answer ») tel que défini dans le document RFC 4005.

Enfin, lors d'une étape E6, l'entité PCEF 31 met en œuvre lesdites règles et autorise les flux média.

Selon un mode de réalisation de l'invention, lors de ladite étape E2, le serveur P-CSCF émet à destination du PCRF, à travers l'interface Rx, une requête dans laquelle le serveur P-CSCF demande à être notifié de l'état des média contrôlés par ce serveur P-CSCF et en cours d'utilisation.

Pour ce faire, le serveur P-CSCF peut par exemple, avantageusement, appliquer la procédure indiquée dans les Sections 4.4.6.4 et 5.3.13 du document TS 29.214 précité, ainsi que dans la section B.1a du document TS 29.213 du 3GPP : cette demande de notification prend alors la forme d'un message Diameter AAR valorisant un champ « Attribute-Value Pair » (AVP) appelé « Specific-Action ». Plus précisément, il est proposé à cet effet une nouvelle valeur de l'AVP « Specific Action », que l'on appellera « PERIODIC_MEDIA_STATE ».

De plus, en l'absence de période par défaut, le serveur P-CSCF indique au PCRF une période à l'échéance de laquelle il souhaite être notifié de l'état des média en cours d'utilisation. La périodicité de ces notifications peut être indiquée dans un AVP dédié, que l'on appellera « Media_State_Period ». La période ne doit être ni trop courte (et ce, afin de ne pas surcharger inutilement l'interface), ni trop longue (et ce, afin de permettre un « nettoyage » efficace des composants orphelins). Cet AVP « Media_State_Period » peut, lui aussi, être inséré par le P-CSCF dans le message AAR de demande de ressources mentionné ci-dessus ; le P-CSCF indique ainsi au PCRF un délai à l'échéance duquel le PCRF doit envoyer au P-CSCF un message décrivant l'état courant des média.

De préférence, la demande de notification reste valide pendant toute la durée de la session ; ainsi, il ne sera pas nécessaire de la renouveler.

A l'échéance du délai indiqué dans l'AVP « Media_State_Period », le PCRF émet vers le serveur P-CSCF un message dans lequel il indique l'état courant des média contrôlés par ce serveur P-CSCF et en cours d'utilisation. De préférence, ce message est un message Diameter RAR (Re-Auth-Request) comprenant la valeur « PERIODIC_MEDIA_STATE », mentionnée ci-dessus, de l'AVP « Specific Action », afin de faire le lien avec la « Specific Action » de l'AAR à l'origine du présent message RAR (parmi, le cas échéant, d'autres « Specific Actions » en cours) et d'éviter ainsi des risques de confusion. Pour décrire l'état courant des média, le PCRF peut optionnellement utiliser un AVP groupé « Flows » (qu'il est possible, classiquement, d'insérer dans les messages Diameter RAR).

Suite à la réception par le serveur P-CSCF d'un tel message Diameter RAR :
- soit la liste de média fournie par le PCRF est identique à celle connue du serveur P-CSCF, et alors le serveur P-CSCF n'entreprend aucune action en conséquence,
- soit un sous-ensemble des média de la liste est différent de ceux connus, et alors le serveur P-CSCF corrige son état des média en cours d'utilisation,
- soit l'ensemble des média de la liste est inconnu pour cette session, et alors le serveur P-CSCF demande la libération de la session en émettant un message Diameter STR (« Session Termination Request »),
- soit la session elle-même est inconnue, et alors le serveur P-CSCF demande sa libération (message STR).

De manière générale, la présente invention peut être mise en œuvre au sein des nœuds d'un réseau IP, par exemple des entités de contrôle des règles ou des entités applicatives, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de synchronisation selon l'invention.

En effet, l'invention vise aussi un programme d'ordinateur téléchargeable depuis un réseau de communication comprenant des instructions pour l'exécution des étapes d'un procédé de synchronisation selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de synchronisation selon l'invention.

## Revendications

1. Procédé de synchronisation d'état média, comprenant les étapes suivantes :
- une entité applicative (AF) émet vers une entité de contrôle des règles (PCRF) une requête demandant à ladite entité de contrôle des règles (PCRF) d'envoyer à ladite entité applicative (AF) un message décrivant l'état connu de l'entité de contrôle des règles (PCRF) des média contrôlés par cette entité applicative (AF) et en cours d'utilisation,
- à l'échéance d'un délai par défaut ou contenu dans ladite requête, l'entité de contrôle des règles (PCRF) émet vers l'entité applicative (AF) un message dans lequel l'entité de contrôle des règles (PCRF) décrit l'état desdits média, et
- suite à la réception dudit message, l'entité applicative (AF)
• n'entreprend aucune action si la liste de média fournie par l'entité de contrôle des règles (PCRF) est identique à la liste de média connue de l'entité applicative (AF), ou
• corrige son état desdits média si un sous-ensemble des média de la liste fournie par l'entité de contrôle des règles (PCRF) est différent de la liste de média connue de l'entité applicative (AF), ou
• demande la libération de la session si l'ensemble des média de la liste fournie par l'entité de contrôle des règles (PCRF) est différent de la liste de média connue de l'entité applicative (AF) ou si la session elle-même est inconnue de l'entité applicative (AF).

2. Procédé de synchronisation selon la revendication 1, **caractérisé en ce que** l'entité applicative (AF) indique en outre à l'entité de contrôle des règles (PCRF) une période à l'échéance de laquelle l'entité applicative (AF) souhaite recevoir lesdits messages décrivant l'état desdits média.

3. Procédé de synchronisation selon la revendication 1 ou la revendication 2, **caractérisé en ce que** ladite requête est présentée par ladite entité applicative (AF) lors d'une demande de ressources média auprès de ladite entité de contrôle des règles (PCRF).

4. Procédé de synchronisation selon l'une quelconque des revendications 1 à 3, **caractérisé en ce que** les échanges entre l'entité applicative (AF) et l'entité de contrôle des règles (PCRF) sont conformes au protocole Diameter.

5. Procédé de synchronisation selon les revendications 2 à 4, **caractérisé en ce que** ladite période est indiquée dans un Attribute-Value Pair dédié d'un message Diameter AA-Request.

6. Procédé de synchronisation selon les revendications 3 et 4, **caractérisé en ce que** ladite requête est insérée dans l'Attribute-Value Pair Specific-Action d'un message Diameter AA-Request.

7. Procédé de synchronisation selon l'une quelconque des revendications 4 à 6, **caractérisé en ce que** ledit message contenant l'état desdits média est envoyé à l'entité applicative (AF) par l'entité de contrôle des règles (PCRF) dans un message Diameter RA-Request.

8. Entité applicative (AF), comprenant des moyens pour :
- émettre vers une entité de contrôle des règles (PCRF) une requête demandant à ladite entité de contrôle des règles (PCRF) d'envoyer à ladite entité applicative (AF) un message décrivant l'état connu de l'entité de contrôle des règles (PCRF) des média contrôlés par cette entité applicative (AF) et en cours d'utilisation,
- recevoir un message dans lequel l'entité de contrôle des règles (PCRF) décrit l'état desdits média, et
- suite à la réception dudit message,
• n'entreprendre aucune action si la liste de média fournie par l'entité de contrôle des règles (PCRF) est identique à la liste de média connue de l'entité applicative (AF), ou
• corriger son état desdits média si un sous-ensemble des média de la liste fournie par l'entité de contrôle des règles (PCRF) est différent de la liste de média connue de l'entité applicative (AF), ou
• demander la libération de la session si l'ensemble des média de la liste fournie par l'entité de contrôle des règles (PCRF) est différent de la liste de média connue de l'entité applicative (AF) ou si la session elle-même est inconnue de l'entité applicative (AF).

9. Entité applicative (AF) selon la revendication 8, **caractérisée en ce qu'**elle comprend en outre des moyens pour indiquer à ladite entité de contrôle des règles (PCRF) une période à l'échéance de laquelle l'entité applicative (AF) souhaite recevoir lesdits messages décrivant l'état desdits média.

10. Entité applicative (AF) selon la revendication 8 ou la revendication 9, **caractérisée en ce qu'**elle comprend en outre des moyens pour mettre en œuvre le protocole Diameter.

11. Entité applicative (AF) selon l'une quelconque des revendications 8 à 10, **caractérisée en ce qu'**elle est associée à un serveur P-CSCF dans un réseau IP Multimedia Subsystem.

12. Système de communication, comprenant au moins une entité applicative (AF) selon l'une quelconque des revendications 8 à 11, et au moins une entité de contrôle des règles (PCRF) comprenant des moyens pour :
- recevoir d'une entité applicative (AF) une requête demandant à ladite entité de contrôle des règles d'envoyer à ladite entité applicative (AF) un message décrivant l'état connu de l'entité de contrôle des règles (PCRF) des média contrôlés par cette entité applicative (AF) et en cours d'utilisation ; et
- émettre vers l'entité applicative (AF) un message dans lequel l'entité de contrôle des règles (PCRF) décrit l'état desdits média, l'émission du message étant déclenchée à l'échéance d'un délai par défaut ou contenu dans ladite requête.

13. Système de communication selon la revendication 12 dans lequel ladite entité de contrôle des règles (PCRF) comprend en outre des moyens pour mettre en œuvre le protocole Diameter.

14. Moyen de stockage de données inamovible, ou partiellement ou totalement amovible, comportant des instructions de code de programme informatique qui, lorsque le programme est exécuté par un ordinateur, conduisent celui-ci à mettre en œuvre des étapes d'un procédé de synchronisation selon l'une quelconque des revendications 1 à 7.

15. Programme d'ordinateur téléchargeable depuis un réseau de communications et/ou stocké sur un support lisible par ordinateur et/ou exécutable par un microprocesseur, **caractérisé en ce qu'**il comprend des instructions qui, lorsque le programme est exécuté par un ordinateur, conduisent celui-ci à mettre en œuvre des étapes d'un procédé de synchronisation selon l'une quelconque des revendications 1 à 7, lorsqu'il est exécuté sur un ordinateur.

## Patentansprüche

1. Medienzustand-Synchronisationsverfahren, das die folgenden Schritte enthält:
- eine Anwendungsentität (AF) sendet an eine Richtliniensteuerungsentität (PCRF) eine Anforderung, die von der Richtliniensteuerungsentität (PCRF) fordert, an die Anwendungsentität (AF) eine Nachricht zu schicken, die den der Richtliniensteuerungsentität (PCRF) bekannten Zustand der Medien beschreibt, die von dieser Anwendungsentität (AF) gesteuert und gerade verwendet werden,
- bei Ablauf einer Standard- oder in der Anforderung enthaltenen Frist sendet die Richtliniensteuerungsentität (PCRF) an die Anwendungsentität (AF) eine Nachricht, in der die Richtliniensteuerungsentität (PCRF) den Zustand der Medien beschreibt, und
- nach Empfang der Nachricht,
• unternimmt die Anwendungsentität (AF) keine Aktion, wenn die von der Richtliniensteuerungsentität (PCRF) gelieferte Liste von Medien gleich der der Anwendungsentität (AF) bekannten Liste von Medien ist, oder
• korrigiert sie ihren Zustand der Medien, wenn eine Teileinheit der Medien der von der Richtliniensteuerungsentität (PCRF) gelieferten Liste sich von der der Anwendungsentität (AF) bekannten Liste von Medien unterscheidet, oder
• fordert sie die Freigabe der Sitzung, wenn die Gesamtheit der Medien der von der Richtliniensteuerungsentität (PCRF) gelieferten Liste sich von der der Anwendungsentität (AF) bekannten Liste von Medien unterscheidet oder wenn die Sitzung selbst der Anwendungsentität (AF) unbekannt ist.

2. Synchronisationsverfahren nach Anspruch 1, **dadurch gekennzeichnet, dass** die Anwendungsentität (AF) außerdem der Richtliniensteuerungsentität (PCRF) eine Periode anzeigt, nach deren Ablauf die Anwendungsentität (AF) die den Zustand der Medien beschreibenden Nachrichten empfangen möchte.

3. Synchronisationsverfahren nach Anspruch 1 oder Anspruch 2, **dadurch gekennzeichnet, dass** die Anforderung von der Anwendungsentität (AF) bei einer Anfrage von Medienressourcen bei der Richtliniensteuerungsentität (PCRF) präsentiert wird.

4. Synchronisationsverfahren nach einem der Ansprüche 1 bis 3, **dadurch gekennzeichnet, dass** die Austauschvorgänge zwischen der Anwendungsentität (AF) und der Richtliniensteuerungsentität (PCRF) dem Protokoll Diameter entsprechen.

5. Synchronisationsverfahren nach den Ansprüchen 2 bis 4, **dadurch gekennzeichnet, dass** die Periode in einem dedizierten Attribute-Value Pair einer Nachricht Diameter AA-Request angezeigt wird.

6. Synchronisationsverfahren nach den Ansprüchen 3 und 4, **dadurch gekennzeichnet, dass** die Anforderung in die Attribute-Value Pair Specific-Action einer Nachricht Diameter AA-Request eingefügt wird.

7. Synchronisationsverfahren nach einem der Ansprüche 4 bis 6, **dadurch gekennzeichnet, dass** die den Zustand der Medien enthaltende Nachricht von der Richtliniensteuerungsentität (PCRF) in einer Nachricht Diameter RA-Request an die Anwendungsentität (AF) geschickt wird.

8. Anwendungsentität (AF), die Einrichtungen enthält, um:
- an eine Richtliniensteuerungsentität (PCRF) eine Anforderung zu senden, die von der Richtliniensteuerungsentität (PCRF) fordert, an die Anwendungsentität (AF) eine Nachricht zu schicken, die den der Richtliniensteuerungsentität (PCRF) bekannten Zustand der Medien beschreibt, die von dieser Anwendungsentität (AF) gesteuert und gerade verwendet werden,
- eine Nachricht zu empfangen, in der die Richtliniensteuerungsentität (PCRF) den Zustand der Medien beschreibt, und
- nach dem Empfang der Nachricht
• keine Aktion zu unternehmen, wenn die von der Richtliniensteuerungsentität (PCRF) gelieferte Liste von Medien gleich der der Anwendungsentität (AF) bekannten Liste von Medien ist, oder
• ihren Zustand der Medien zu korrigieren, wenn eine Teileinheit der Medien der von der Richtliniensteuerungsentität (PCRF) gelieferten Liste sich von der der Anwendungsentität (AF) bekannten Liste von Medien unterscheidet, oder
• die Freigabe der Sitzung zu fordern, wenn die Gesamtheit der Medien der von der Richtliniensteuerungsentität (PCRF) gelieferten Liste sich von der der Anwendungsentität (AF) bekannten Liste von Medien unterscheidet oder wenn die Sitzung selbst der Anwendungsentität (AF) unbekannt ist.

9. Anwendungsentität (AF) nach Anspruch 8, **dadurch gekennzeichnet, dass** sie außerdem Einrichtungen enthält, um der Richtliniensteuerungsentität (PCRF) eine Periode anzuzeigen, bei deren Ablauf die Anwendungsentität (AF) wünscht, die Nachrichten zu empfangen, die den Zustand der Medien beschreiben.

10. Anwendungsentität (AF) nach Anspruch 8 oder Anspruch 9, **dadurch gekennzeichnet, dass** sie außerdem Einrichtungen enthält, um das Protokoll Diameter durchzuführen.

11. Anwendungsentität (AF) nach einem der Ansprüche 8 bis 10, **dadurch gekennzeichnet, dass** sie einem Server P-CSCF in einem IP-Netzwerk Multimedia Subsystem zugeordnet ist.

12. Kommunikationssystem, das mindestens eine Anwendungsentität (AF) nach einem der Ansprüche 8 bis 11 und mindestens eine Richtliniensteuerungsentität (PCRF) enthält, die Einrichtungen enthält, um:
- von einer Anwendungsentität (AF) eine Anforderung zu empfangen, die von der Richtliniensteuerungsentität fordert, an die Anwendungsentität (AF) eine Nachricht zu schicken, die den der Richtliniensteuerungsentität (PCRF) bekannten Zustand der von dieser Anwendungsentität (AF) gesteuerten und gerade genutzt werdenden Medien beschreibt; und
- an die Anwendungsentität (AF) eine Nachricht zu senden, in der die Richtliniensteuerungsentität (PCRF) den Zustand der Medien beschreibt, wobei das Senden der Nachricht bei Ablauf einer Standard- oder in der Anforderung enthaltenen Frist ausgelöst wird.

13. Kommunikationssystem nach Anspruch 12, wobei die Richtliniensteuerungsentität (PCRF) außerdem Einrichtungen enthält, um das Protokoll Diameter durchzuführen.

14. Nicht entfernbare oder teilweise oder vollständig entfernbare Datenspeichereinrichtung, die EDV-Programmcodeanweisungen aufweist, die, wenn das Programm von einem Computer ausgeführt wird, diesen veranlassen, Schritte eines Synchronisationsverfahrens nach einem der Ansprüche 1 bis 7 durchzuführen.

15. Computerprogramm, das von einem Kommunikationsnetzwerk herunterladbar und/oder auf einem computerlesbaren Träger gespeichert und/oder von einem Mikroprozessor ausführbar ist, **dadurch gekennzeichnet, dass** es Anweisungen enthält, die, wenn das Programm von einem Computer ausgeführt wird, diesen veranlassen, Schritte eines Synchronisationsverfahrens nach einem der Ansprüche 1 bis 7 durchzuführen, wenn es auf einem Computer ausgeführt wird.

## Claims

1. Method of media state synchronization, comprising the following steps:
- an application entity (AF) sends a request to a rules control entity (PCRF) asking said rules control entity (PCRF) to send a message to said application entity (AF) describing the state, known to the rules control entity (PCRF), of the media controlled by this application entity (AF) and currently in use,
- on expiry of a default time period or one contained in said request, the rules control entity (PCRF) sends the application entity (AF) a message in which the rules control entity (PCRF) describes the state of said media, and
- subsequent to the receipt of said message, the application entity (AF)
• does not undertake any action if the media list provided by the rules control entity (PCRF) is identical to the media list known to the application entity (AF), or
• corrects its state of said media if a subset of the media of the list provided by the rules control entity (PCRF) is different from the media list known to the application entity (AF), or
• requests the release of the session if all the media of the list provided by the rules control entity (PCRF) is different from the media list known to the application entity (AF) or if the session itself is unknown to the application entity (AF).

2. Method of synchronization according to Claim 1, **characterized in that** the application entity (AF) furthermore indicates to the rules control entity (PCRF) a period on expiry of which the application entity (AF) wishes to receive said messages describing the state of said media.

3. Method of synchronization according to Claim 1 or Claim 2, **characterized in that** said request is presented by said application entity (AF) upon a request for media resources to said rules control entity (PCRF).

4. Method of synchronization according to any one of Claims 1 to 3, **characterized in that** the exchanges between the application entity (AF) and the rules control entity (PCRF) comply with the Diameter protocol.

5. Method of synchronization according to Claims 2 to 4, **characterized in that** said period is indicated in a dedicated Attribute-Value Pair of an AA-Request Diameter message.

6. Method of synchronization according to Claims 3 and 4, **characterized in that** said request is inserted into the Specific-Action Attribute-Value Pair of an AA-Request Diameter message.

7. Method of synchronization according to any one of Claims 4 to 6, **characterized in that** said message containing the state of said media is sent to the application entity (AF) by the rules control entity (PCRF) in an RA-Request Diameter message.

8. Application entity (AF), comprising means for:
- sending a request to a rules control entity (PCRF) asking said rules control entity (PCRF) to send a message to said application entity (AF) describing the state, known to the rules control entity (PCRF), of the media controlled by this application entity (AF) and currently in use,
- receiving a message in which the rules control entity (PCRF) describes the state of said media, and
- subsequent to the receipt of said message,
• not undertaking any action if the media list provided by the rules control entity (PCRF) is identical to the media list known to the application entity (AF), or
• correcting its state of said media if a subset of the media of the list provided by the rules control entity (PCRF) is different from the media list known to the application entity (AF), or
• requesting the release of the session if all the media of the list provided by the rules control entity (PCRF) is different from the media list known to the application entity (AF) or if the session itself is unknown to the application entity (AF).

9. Application entity (AF) according to Claim 8, **characterized in that** it furthermore comprises means for indicating to said rules control entity (PCRF) a period on expiry of which the application entity (AF) wishes to receive said messages describing the state of said media.

10. Application entity (AF) according to Claim 8 or Claim 9, **characterized in that** it furthermore comprises means for implementing the Diameter protocol.

11. Application entity (AF) according to any one of Claims 8 to 10, **characterized in that** it is associated with a P-CSCF server in a Multimedia Subsystem IP network.

12. Communication system, comprising at least one application entity (AF) according to any one of Claims 8 to 11, and at least one rules control entity (PCRF) comprising means for:
- receiving from an application entity (AF) a request asking said rules control entity to send a message to said application entity (AF) describing the state, known to the rules control entity (PCRF), of the media controlled by this application entity (AF) and currently in use, and
- sending to the application entity (AF) a message in which the rules control entity (PCRF) describes the state of said media, sending of the message being triggered on expiry of a default time period or one contained in said request.

13. Communication system according to Claim 12, wherein said rules control entity (PCRF) furthermore comprises means for implementing the Diameter protocol.

14. Irremovable, or partially or totally removable means of storage of data, comprising computer program code instructions that, when the program is executed by a computer, lead the latter to implement steps of a method of synchronization according to any one of Claims 1 to 7.

15. Computer program downloadable from a communications network and/or stored on a medium readable by computer and/or executable by a microprocessor, **characterized in that** it comprises instructions that, when the program is executed by a computer, lead the latter to implement steps of a method of synchronization according to any one of Claims 1 to 7, when it is executed on a computer.
